# EUROPEAN PATENT SPECIFICATION

(11) **EP 1 329 136 B1**
(45) Date of publication and mention of the grant of the patent: **10.09.2008**
(21) Application number: 01989040.9
(22) Date of filing: 11.10.2001
(51) Int. Cl.: H05B 6/74

(54) **FEEDING OF MICROWAVES**
ZUFÜHRUNG VON MIKROWELLEN
INJECTION D'ENERGIE HYPERFREQUENCE

(30) Priority: 25.10.2000 SE 0003873
(43) Date of publication of application: 23.07.2003
(73) Proprietor: WHIRLPOOL CORPORATION, Benton Harbor Michigan 49022 (US)
(72) Inventor: TÖRNGREN, Per, c/o Whirlpool Europe s.r.l., 21025 Comerio (IT); Nordh, Ulf, c/o Whirlpool Europe s.r.l., 21025 Comerio (IT); Carlsson, Håkan, c/o Whirlpool Europe s.r.l., 21025 Comerio (IT); Ekinge, Roland, c/o Whirlpool Europe s.r.l., 21025 Comerio (IT)
(74) Representative: Guerci, Alessandro
(86) International application number: PCT/EP2001/011789
(87) International publication number: WO 2002/035886

(56) References cited:
- EP-A2- 0 373 608
- US-A- 5 935 479
- US-A- 6 057 535

## Description

### Technical Field

The present invention relates to the field of microwave ovens and, more particularly, to feeding microwaves to the cavity of a microwave oven for heating food which is placed in the cavity.

### Technical Background

When coupling microwaves into the cavity of a microwave oven, part of the available power is reflected back from the cavity; there is a coupling factor that is smaller than one. If the coupling factor equalled one, all the power that is fed to a feeding position of the cavity would also be coupled into one of the cavity modes.

Since reflection of microwave power from the cavity is always present, there is the problem of how to handle the reflected power.

EP-A-373698 discloses a microwave oven having a waveguide, a heating chamber and a plurality of power feeding ports for communicating the waveguide and the heating chamber.

In prior-art technique microwave power reflected from the cavity has been allowed to return to the microwave source, thus causing undesirable heating thereof. It has therefore been necessary to provide powerful cooling of the microwave source, which, of course, results in loss of energy. With a view to minimising the reflected power from the cavity, attempts have been made, in some cases, to form the microwave system of the oven so as to prevent any temperature rush in the microwave source. For example, the cavity has been given a geometry and the microwave source an operating point which at least partly intend to alleviate the above-mentioned problem. However, it has not been possible to solve in a satisfactory way the problems of the microwave power reflected back to the microwave source. Moreover, the elaborate design of the microwave system has taken many engineering hours, and continuously requires a great effort in connection with each modification of the microwave system of the microwave oven.

Other attempts to eliminate the problems with reflected microwave power are based on various forms of noload protection. A no-load protection serves to stop the feeding of microwaves from the source if certain limiting values are exceeded. A first, obvious problem with this approach is, of course, that the heating of the load placed in the cavity is stopped. A second problem is to determine when the no-load protection should begin. If the load in the cavity is small, the protection system may start, even though it is not desired.

There is thus a need for improved microwave ovens, as well as methods for feeding microwaves to them, which avoid the above-mentioned problems.

### Summary of the Invention

A general object of the present invention is to eliminate problems that are associated with feeding of microwaves to, and reflection of microwaves from, the cavity of a microwave oven. By increasing the probability of successful feeding of microwaves to the cavity, the present invention also allows a degree of efficiency of the microwave oven which may be higher than that of microwave ovens according to prior-art technique. This general object, and other objects and advantages which will be evident from the following description, will be achieved by means of a microwave oven and a method of the type stated in the appended claims.

In accordance with the invention, as claimed in claim 1, a microwave oven is thus provided with at least two feeding ports, through which microwaves are to be fed to the cavity of the microwave oven. The microwave oven is adapted for primary feeding through a first feeding port. Any microwave power that is reflected from the first feeding port is directed to a second feeding port, through which the microwave power that is reflected from the first feeding port is fed to the cavity. The present invention thus provides a new type of serial feeding of microwave power to the cavity of a microwave oven, the microwave generator of the microwave oven being operatively connected to a first feeding port via a microwave circulator. Said circulator is arranged to direct any microwave power which is reflected from the first feeding port to a second feeding port.

According to one aspect of the invention, a domestic microwave oven is provided, comprising two or more feeding ports which are used for serial feeding of microwave power to the cavity of the microwave oven.

According to another aspect of the invention, a method is provided for serial feeding of microwaves to the cavity of a microwave oven.

Preferably, but not necessarily, the first and the second feeding port are arranged on sides of the cavity that are orthogonal in relation to one another, whereby the cavity is thus feedable from two orthogonal directions. Such an arrangement gives an increased possibility of specially adapted cavity design and increases the probability of successful feeding of microwaves to the cavity.

In another embodiment of the invention, the cavity of the microwave oven is provided with at least three feeding ports, any microwave radiation which is reflected from the second feeding port being directed to a third feeding port. Said directing of microwaves from the second feeding port to the third feeding port preferably takes place in a manner similar to the directing of microwaves from the first to the second feeding port.

In another embodiment of the invention, each feeding port is arranged to feed microwaves to essentially a single specific mode of the cavity. An advantage of this type of feeding is that it is possible to control, in a more flexible manner, the distribution of energy in the cavity.

According to the present invention, serial feeding of microwave power to the cavity of a microwave oven may take place via a plurality of feeding ports with a view to coupling a maximum ratio of available microwave power to the cavity. However, it is possible that some microwave power is reflected also from the last feeding port in a series of feeding ports and, thus, never enters the cavity. Preferably, the microwave oven is arranged to let such microwave power impinge on a dummy load, in which said microwave power is converted to waste heat.

Advantageously, the amount of power impinging on the dummy load may be measured and the result of such a measurement may then be used to control the feeding to the microwave oven. Such controlling comprises controlling the frequency of the microwave power, which is emitted by the microwave generator, and controlling the power level.

Preferably, the feeding of microwaves is controlled in such a manner that the total reflected power from the cavity is minimised, the maximum ratio of available microwave power being used for heating the load which is placed in the cavity. Preferably, in that case, the frequency of the microwave radiation is tuned to a frequency that gives a high coupling factor to the cavity.

It is also possible to set up a limiting value for the power which is directed towards the dummy load, the limiting value indicating when the cavity of the microwave oven is to be considered as empty and the microwave generator may be switched off or at least adjusted to lower power.

### Brief Description of the Drawings

The various objects and features of the invention will be evident from the following detailed description of a number of preferred embodiments. In the description references will be made to the accompanying drawings, in which
Fig. 1 is a block diagram which generally shows the basic function of the present invention,
Fig. 2 schematically shows a microwave oven which is provided with a plurality of feeding ports which are arranged to be fed in accordance with the present invention,
Fig. 3 schematically shows an example of a cavity which is provided with feeding ports for exciting selected modes in the cavity,
Fig. 4 schematically shows a first preferred type of feeding port for use in accordance with the present invention, and
Fig. 5 schematically shows a second preferred type of feeding port for use in accordance with the present invention.

### Description of Preferred Embodiments

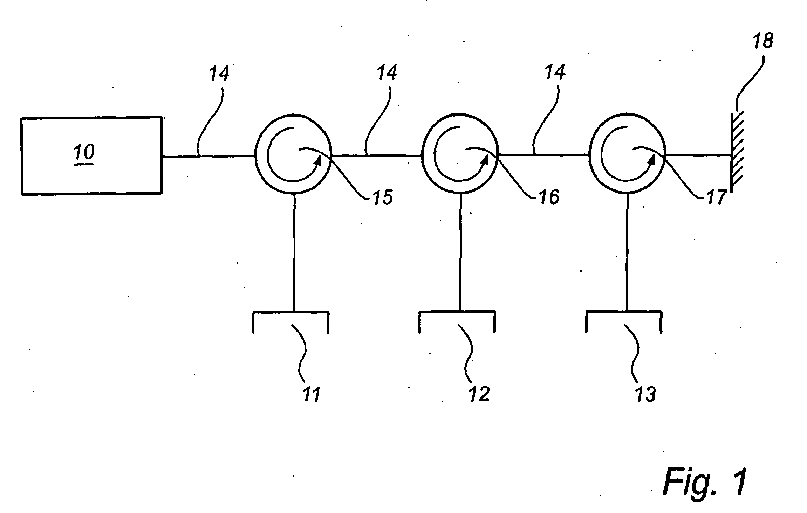

The basic principles of the invention will now be further described with reference to Fig. 1. Fig. 1 schematically shows a microwave generator 10 which is operatively connected to three different feeding ports 11, 12 and 13. The feeding ports 11, 12, 13 are arranged to couple microwave radiation into the cavity of a microwave oven (not shown) in a suitable manner. Two preferred types of feeding ports are described in this application. However, it is obvious to those skilled in the art that also other types of feeding ports may be used in accordance with the present invention. Preferably, the three feeding ports 11, 12, 13 are located on sides in the cavity (i.e. in the bottom, in the side wall and in the top of the cavity) which are orthogonal in relation to one another. However, it is to be noted that the present invention is not limited to a predetermined location of the feeding ports. It is thus also conceivable that two serially feedable ports are placed on the same side of the cavity.

Microwaves (i.e. microwave power) are fed from the microwave generator 10 to the feeding ports 11, 12, 13 by means of a transmission line 14, to which each feeding port is connected through an associated microwave circulator 15, 16, 17. This arrangement results in any microwave power possibly reflected from one of the feeding ports being passed on in the transmission line 14 and, thus, not returning towards the generator 10. Microwave power which, for instance, is not coupled into the cavity via the first feeding port 11 will thus be passed on towards the second feeding port 12 by the microwave circulator 15 and be coupled into the cavity via the second feeding port and a second circulator 16 associated therewith. An attempt is thus made automatically to feed the microwave radiation which could not be fed through the first feeding port 11 through the second feeding port 12 instead. In the cases where the second feeding port 12 is placed on a side that is orthogonal to the side on which the first feeding port 11 is placed, the probability that feeding via the second feeding port will succeed may be further increased.

For the purpose of further increasing the possibilities of feeding to the cavity, there is preferably also a third feeding port 13. Microwave radiation which is possibly reflected also from the second feeding port 12 is passed, in a similar manner, via the second microwave circulator 16 to the third feeding port 13. As a precautionary measure, if microwaves would be reflected also from the third feeding port, a third microwave circulator 17 is preferably arranged to feed microwaves which are reflected from the third feeding port to a dummy load 18. All microwave radiation impinging on the dummy load 18 will in that case be converted to waste heat.

Preferably, the power of the radiation impinging on the dummy load 18 is measured and the result of such a measurement is used to control the generator 10. Such controlling may, for example, comprise tuning of the frequency of the microwaves emitted from the generator or adjustment of the microwave power given by the generator.

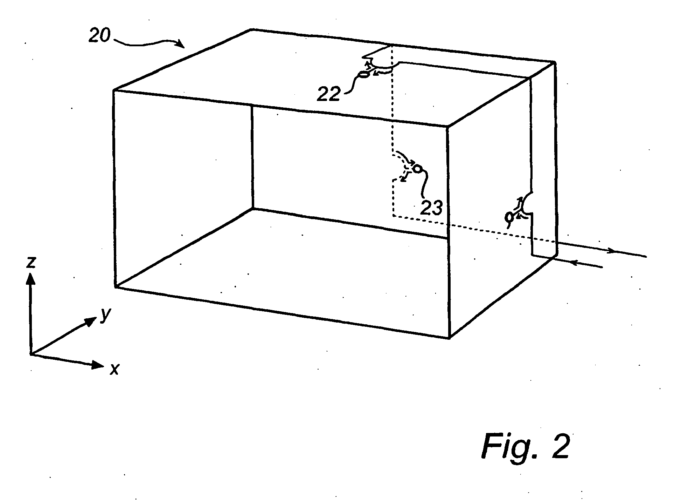

Fig. 2 shows a cavity 20 in a microwave oven (not shown) and feeding ports which are placed on the enclosing surface of the cavity 20. The figure shows three feeding ports 21, 22 and 23 placed on the enclosing surface to the right in the figure, on the top of the cavity and on the rear enclosing surface of the cavity, respectively. The shown arrangement of the feeding ports 21, 22 and 23 is an example of orthogonal arrangement of the feeding ports. Even though the shown cavity 20 is a rectangular cavity, it will be appreciated that a similar distribution of the feeding ports may be used in connection with, for example, a cylindrical cavity.

A serial feeding of microwave power to the cavity is performed in accordance with the present invention by microwaves being fed to the three feeding ports 21, 22, 23, which are arranged in a series, via a transmission line and one directing means for each feeding port (indicated by means of arrows). First feeding takes place through the first feeding port 21. Microwave power which may be reflected from the first feeding port 21 is passed on, by the directing means of the first feeding port, in the transmission line for subsequent feeding through the second feeding port 22. Microwaves which may be reflected from the second feeding port 22 are passed on, by the directing means of the second feeding port, in the transmission line for subsequent feeding through the third feeding port 23. Also the third feeding port has an associated directing means that feeds the microwave power which might be reflected also from the third feeding port, in the transmission line. The microwave power which is not coupled into the cavity through any one of the feeding ports in the series of feeding ports is finally made to preferably impinge on a dummy load (not shown), in which the microwave power is converted to waste heat.

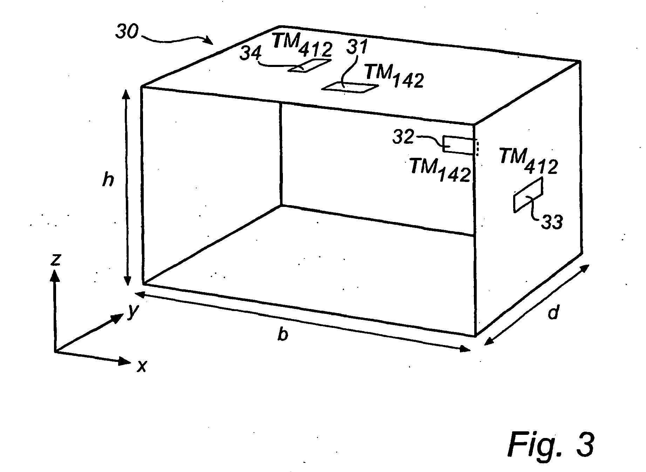

Fig. 3 schematically shows a preferred location of four different feeding ports exciting two different modes in the cavity 30. A first and a second feeding port are adapted to excite a first mode in the cavity, and a third and a fourth feeding port are adapted to excite a second mode in the cavity. In order not to make the figure too complicated, the transmission lines and the microwave circulators have been left out of the figure, but when those skilled in the art have read this description, it will be obvious to them how these parts are to be placed in order to obtain the function according to the invention.

In the example shown in Fig. 3, the cavity 30 has the dimensions b = 327 mm, d = 327 mm, h = 189 mm. The cavity thus has a square cross-section in the horizontal plane. The feeding ports shown in the figure are arranged to feed the modes TM₁₄₂ and TM₄₁₂, which is indicated in the system of co-ordinates shown in the figure. The first feeding port 31 which is arranged to feed the mode TM₁₄₂ is placed at x = b/2, y = d/4, z = h and the second feeding port 32 which is also arranged to feed the mode TM₁₄₂ is placed at x = b/2, y = d, z = h/2. The third feeding port 33 which is arranged to feed the mode TM₄₁₂ is placed at x = b, y = d/2, z = h/2 and the fourth feeding port 34 which is also arranged to feed the mode TM₄₁₂ is placed at x = b/4, y = d/2, z = h. The figure also indicates how the ports 31, 32, 33 and 34 are oriented, which suggests which component of the magnetic field in the cavity is excited by the respective ports. From the following description of preferred types of feeding ports it will, of course, be appreciated that coupling takes place to a predetermined component of the magnetic field in the cavity.

When feeding microwaves to the cavity 30 shown in Fig. 3, at least two modes in the cavity (TM₁₄₂ and TM₄₁₂) are fed separately. The mode TM₁₄₂ is fed primarily via the first feeding port 31 via a first microwave circulator (not shown). Any microwave power which may be reflected from the cavity back through the feeding port 31 is automatically passed on to the second feeding port 32 that functions as a secondary feeding port for the cavity mode TM₁₄₂. In a similar way, the mode TM₄₁₂ is fed primarily via the third feeding port 33 via a second microwave circulator (not shown). Any microwave power which may be reflected from the cavity back through the feeding port 33 is automatically passed on to the fourth feeding port 34 which functions as a secondary feeding port for the cavity mode TM₄₁₂.

On the analogy of what has already been described, any microwave power which may be reflected also from the second and the fourth feeding port, respectively, may be passed on to yet another feeding port or be made to impinge on a dummy load, in which the microwaves are converted to waste heat. It is conceivable that there is one dummy load for each feeding loop (i.e. one for the feeding ports 31, 32 and one for the feeding ports 33, 34) or one common dummy load for all the loops.

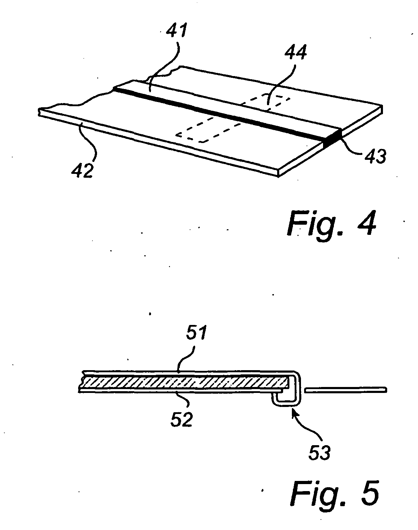

Fig. 4 is a perspective view of a first preferred type of feeding port for use in accordance with the present invention. In the shown example, microwaves are fed to the feeding port by means of a transmission line in the form of a microstrip 41 which is located outside the enclosing surface 42 of the cavity. The conducting plane of the microstrip 41 is at one place 43 short-circuited with the ground plane 42 (in the shown example, the same as the enclosing surface of the cavity), which leads to the microwaves that propagate in the line 41 being reflected adjacent to said short circuit 43; a standing wave is formed in the transmission line 41. At a distance from said short circuit corresponding to half a wavelength in the microstrip 41, a slot 44 is formed in the ground plane and in the enclosing surface of the cavity. At said distance from the short circuit 43, the standing wave in the transmission line 41 exhibits a maximum current and, therefore, also the magnetic field in this position exhibits a maximum. The magnetic field is, of course, directed circularly about the conductor and will thus be let into the cavity through said slot.

Fig. 5 shows a second preferred type of feeding port for use in accordance with the present invention. Unlike the preceding case with a slot in the ground plane/cavity wall, the conducting plane 51 is now short-circuited with the ground plane 52 (which also in this case is the same as the enclosing surface of the cavity) in the form of a loop 53 which extends through an opening in the cavity wall. Current will thus bypass the loop 53 and, therefore, induce a magnetic flux transversely to the plane of the loop. Consequently, the loop is designated H-loop since coupling takes place to the H-field in the cavity.

If the coupling to the cavity is not perfect, some microwave power will be reflected back through the feeding port, into the transmission line. According to the present invention, the microwave power, which is reflected from a feeding port, is passed on to another feeding port, whereby feeding to the cavity also takes place via yet another feeding port. Feeding via the ports thus takes place serially.

## Claims

1. A method for feeding microwaves to a cavity of a microwave oven, the method comprising the step of
feeding microwave power to the cavity by means of at least two feeding ports (11,12) **characterised in that** it further comprises the step of passing any microwave power which is reflected from a first feeding port (11) to a second feeding port (12), and
feeding the microwave power which is reflected from the first feeding port (11) to the cavity (20) by means of the second feeding port (12), microwave power being fed from a microwave generator (10) to the feeding ports (11,12) by means of a transmission line (14), to which each feeding port is connected through an associated microwave circulator (15,16).

2. A method as claimed in claim 1, further comprising the steps of
passing any microwave power which is reflected from the second feeding port (12) to a third feeding port (13), and
feeding the microwave power which is reflected from the second feeding port (12) to the cavity (20) by means of the third feeding port (13).

3. A method as claimed in any one of the preceding claims, further comprising the step of making the microwave power which is reflected from the last feeding port (13) in a series of feeding ports (11,12) to impinge on a dummy load (18) which absorbs impinging microwave power.

4. A method as claimed in claim 3, further comprising the step of measuring the microwave power impinging on the dummy load (18).

5. A method as claimed in claim 4, wherein the result of the measurement of the microwave power impinging on the dummy load (18) is used for controlling the frequency and/or the power of the microwaves.

6. A method as claimed in claim 1 wherein feeding by means of the first feeding port (11) and feeding by means of the second feeding port (12) takes place from two sides of the cavity (20) which are orthogonal in relation to one another.

7. A method as claimed in any one of the preceding claims, wherein each feeding port (11,12,13) feeds essentially one predetermined mode in the cavity.

8. A method as claimed in claim 7, wherein the first and the second feeding port (11,12) feed one and the same predetermined mode in the cavity.

9. A method as claim in claim 7, wherein the first and the second feeding port (11,12) feed two different modes in the cavity.

10. A method as claimed in claim 1, wherein the microwave power which is fed through the feeding pores (11,12,13) is distributed in the cavity (20) by means of a microwave stirrer.

11. A microwave oven which comprises a cavity (20,30), a microwave generator (10), a first feeding port (11,21) and a second feeding port (12,22) the feeding ports being arranged to feed microwave power to the cavity (20,30), **characterised in that** the microwave generator (10) is operatively connected to the first feeding port (11,21) and the first feeding port is operatively connected to the second feeding port (12,22) in such a manner that any microwaves power that is reflected from the first feeding port is passed on to the second feeding port, microwave power being fed the microwave generator (10) to the feeding ports (11,21,12,22) by means of a transmission line (14) to which each feeding port is connected through an associated microwave circulator (15,16).

12. A microwave oven as claimed in claim 11 in which the transmission line (14), has a first, a second and a third terminal, the first terminal of the transmission line (14), being operatively connected to the generator (10), its second terminal being operatively connected to the first feeding port and its third terminal being operatively connected to the second feeding port, the transmission line (14) being adapted to pass microwave power entering on the first terminal to be output on the second terminal, and pass microwave power entering on the second terminal to be output on the third terminal.

13. A microwave oven as claimed in any one of claims 11-12, wherein at least one of the feeding ports (11,21,12,22,13,23) is arranged to be supplied with microwave power by means of the transmission line in the form of a stripline or a microstrip (41), the transmission line (41) having a slot (49) in its ground plane in a position which, at least partly, overlaps said feeding port at the same time as the transmission line (41) exhibits a current maximum at said slot (49), whereby the magnetic field in said transmission line is let into the cavity and, thus, feeds energy thereto.

14. A microwave oven as claimed in any one of claims 11-12, wherein at least one of the feeding ports is arranged to be supplied with microwave power by means of the transmission line in the form of a stripline or a microstrip (41), the ground plane of the transmission line being short-circuited with its conducting plane (51) by means of a loop (53) which extends into the cavity through said feeding port, whereby an H-loop is formed that feeds energy into the cavity.

15. A microwave oven as claimed in any one of claims 11-14, further comprising a dummy load (18) which is arranged to absorb microwave power that is reflected from the last feeding port in a series of feeding ports.

16. A microwave oven as claimed in claim 15, further comprising a probe for direct or indirect measurring of microwave power impinging on the dummy load (18).

## Patentansprüche

1. Verfahren zur Zufuhr von Mikrowellen zu einem Hohlraum eines Mikrowellenofens, wobei das Verfahren die Schritte des
Zuführens von Mikrowellen-Energie zum Hohlraum mittels zumindest zweier Zufuhranschlüsse (11, 12) umfasst, **dadurch gekennzeichnet, dass** es weiter den Schritt des
Hindurchtretens jeglicher Mikrowellen-Energie, die reflektiert wurde, von einem ersten Zufuhranschluss (11) zu einem zweiten Zufuhranschluss (12), und
Zufuhr der Mikrowellen-Energie, die reflektiert wurde, von dem ersten Zufuhranschluss (11) zum Hohlraum (20) mittels des zweiten Zufuhranschlusses (12) umfasst, wobei die Mikrowellen-Energie von einem Mikrowellen-Generator (10) zu den Zufuhranschlüssen (11, 12) mittels einer Übermittlungsleitung (14) zugeführt wird, mit der jeder Zufuhranschluss durch einen zugehörigen Mikrowellenzirkulator (15, 26) hindurch, verbunden ist.

2. Verfahren wie in Anspruch 1 beansprucht, des Weiteren umfassend die Schritte des
Hindurchführens jeder Mikrowellen-Energie, die reflektiert wurde, vom zweiten Zufuhranschluss (12) zu einem dritten Zufuhranschluss (13), und des
Zuführen der Mikrowellen-Energie, die reflektiert wurde, vom zweiten Zufuhranschluss (12) zum Hohlraum (20) mittels des dritten Zufuhranschlusses (13).

3. Verfahren wie in einem der voranstehenden Ansprüche beansprucht, des Weiteren umfassend den Schritt des Bewirkens, dass die Mikrowellen-Energie, die reflektiert wurde, vom letzten Zufuhranschluss (13) in einer Reihe von Zufuhranschlüssen (11, 12) auf eine Dummy-Beladung (18) auftritt, die auftreffende Mikrowellen-Energie absorbiert.

4. Verfahren wie in Anspruch 3 beansprucht, des Weiteren umfassend den Schritt der Messung der Mikrowellen-Energie, die auf die Dummy-Beladung (18) auftrifft.

5. Verfahren wie in Anspruch 4 beansprucht, wobei das Ergebnis der Messung der auf die Dummy-Beladung (18) auftreffenden Mikrowellen-Energie zur Steuerung der Frequenz und/oder der Leistung der Mikrowellen verwendet wird.

6. Verfahren wie in Anspruch 1 beansprucht, wobei die Zufuhr mittels des ersten Zufuhranschlusses (11) sowie die Zufuhr mittels des zweiten Zufuhranschlusses (12) von zwei Seiten des Hohlraums (20), welche orthogonal zueinander stehen, ausgeführt wird.

7. Verfahren wie in einem der voranstehenden Ansprüche beansprucht, wobei jeder Zufuhranschluss (11, 12, 13) im Wesentlichen einen vorab festgelegten Modus in den Hohlraum zuführt.

8. Verfahren wie in Anspruch 7 beansprucht, wobei der erste und der zweiten Zufuhranschluss (11, 12) ein und denselben vorab festgelegten Modus in den Hohlraum zuführen.

9. Verfahren wie in Anspruch 7 beansprucht, wobei der erste und der zweite Zufuhranschluss (11, 12) zwei verschiedene Moden in den Hohlraum zuführen.

10. Verfahren wie in Anspruch 1 beansprucht, wobei die Mikrowellen-Energie, die durch die Zufuhranschlüsse (11, 12, 13) zugeführt wurde, in dem Hohlraum (20) mittels eines Mikrowellenrührers verteilt wird.

11. Mikrowellenofen, der einen Hohlraum (20, 30), einen Mikrowellengenerator (10), einen ersten Zufuhranschluss (11, 21) sowie einen zweiten Zufuhranschluss (12, 22) umfasst, wobei die Zufuhranschlüsse so angeordnet sind, dass sie Mikrowellen-Energie zu dem Hohlraum (20, 30) zuführen, **dadurch gekennzeichnet, dass** der Mikrowellengenerator (10) operativ mit dem ersten Zufuhranschluss (11, 21) verbunden ist und der erste Zufuhranschluss operativ mit dem zweiten Zufuhranschluss (12, 22) auf eine solche Weise verbunden ist, dass jegliche Mikrowellen-Energie, die vom ersten Zufuhranschluss reflektiert wurde, auf den zweiten Zufuhranschluss hin verläuft, wobei die von dem Mikrowellengenerator (10) zu den Zufuhranschlüssen (11, 21, 12, 22) gespeiste Mikrowellenenergie mittels einer Übermittlungsleitung (14) zugeführt wird, mit der jeder Zufuhranschluss durch einen damit verbundenen Mikrowellenzirkulator (15, 16) verbunden ist.

12. Mikrowellenofen wie in Anspruch 11 beansprucht, bei dem die Übermittlungsleitung (14) ein erstes, ein zweites sowie ein drittes Anschlusselement aufweist, wobei das erste Anschlusselement der Übermittlungsleitung (14) operativ mit dem Generator (10) verbunden ist, dessen zweites Anschlusselement operativ mit dem ersten Zufuhranschluss verbunden ist und dessen drittes Anschlusselement operativ mit dem zweiten Zufuhranschluss verbunden ist, wobei die Übermittlungsleitung (14) dazu angepasst ist, Mikrowellen-Energie, die am ersten Anschlusselement eintritt, so zu leiten, dass sie am zweiten Anschlusselement austritt, und Mikrowellen-Energie, die am zweiten Anschlusselement eintritt, so zu leiten, dass sie am dritten Anschlusselement austritt.

13. Mikrowellenofen wie in einem der Ansprüche 11 und 12 beansprucht, wobei zumindest einer der Zufuhranschlüsse (11, 21, 12, 22, 13, 23) so angeordnet ist, dass er mittels der Übermittlungsleitung in der Form einer Streifenleitung oder eines Mikrostreifens (41) mit Mikrowellen-Energie gespeist wird, wobei die Übermittlungsleitung (41) einen Schlitz (44) in deren Grundebene an einer Position aufweist, die zumindest teilweise der Zufuhranschluss zum gleichen Zeitpunkt überlappt, bei dem die Übermittlungsleitung (41) einen Maximalstrom an dem Schlitz (44) ausübt, wodurch das magnetische Feld in der Übermittlungsleitung in den Hohlraum hineingeführt wird und somit in den Hohlraum Energie zuführt.

14. Mikrowellenofen wie in einem der Ansprüche 11 bis 12 beansprucht, wobei zumindest einer der Zufuhranschlüsse so angeordnet ist, dass er mit Mikrowellen-Energie mittels der Übermittlungsleitung in der Form einer Streifenleitung oder eines Mikrostreifens (41) gespeist wird, wobei die Grundebene der Übermittlungsleitung mit ihrer Leitungsebene (51) mittels einer Leiterschleife (53) kurzgeschlossen ist, die sich durch den Zufuhranschluss in den Hohlraum hinein erstreckt, wodurch eine H-Leiterschleife ausgebildet wird, die Energie in den Hohlraum hinein zuführt.

15. Mikrowellenofen wie in einem der Ansprüche 11 bis 14 beansprucht, des Weiteren umfassend eine Dummy-Beladung (18), die dazu angeordnet ist, Mikrowellen-Energie, die von dem letzten Zufuhranschluss reflektiert wurde, in einer Reihe von Zufuhranschlüssen zu absorbieren.

16. Mikrowellenofen wie in Anspruch 15 beansprucht, des Weiteren umfassend einen Sensor zur direkten oder indirekten Messung der auf die Dummy-Beladung (18) auftreffenden Mikrowellen-Energie.

## Revendications

1. Procédé pour injecter des micro-ondes dans une cavité d'un four à micro-ondes, le procédé comprenant l'étape consistant à injecter une puissance à micro-ondes dans la cavité au moyen d'au moins deux ports d'injection (11, 12), **caractérisé en ce qu'**il comprend en outre l'étape consistant à faire passer toute puissance à micro-ondes qui est réfléchie depuis un premier port d'injection (11) vers un second port d'injection (12), et à injecter la puissance à micro-ondes qui est réfléchie depuis le premier port d'injection (11) vers la cavité (20) au moyen du second port d'injection (12), la puissance à micro-ondes étant injectée depuis un générateur à micro-ondes (10) vers les ports d'injection (11, 12) au moyen d'une ligne de transmission (14), à laquelle chaque port d'injection est connecté via un circulateur à micro-ondes associé (15, 16).

2. Procédé selon la revendication 1, comprenant en outre les étapes consistant à :
faire passer toute puissance à micro-ondes qui est réfléchie depuis le second port d'injection (12) vers un troisième port d'injection (13), et
injecter la puissance à micro-ondes qui est réfléchie depuis le second port d'injection (12) vers la cavité (20) au moyen du troisième port d'injection (13).

3. Procédé selon l'une quelconque des revendications précédentes, comprenant en outre l'étape consistant à amener la puissance à micro-ondes qui est réfléchie depuis le dernier port d'injection (13) dans une série de ports d'injection (11, 12) à tomber sur une charge factice (18) qui absorbe la puissance à micro-ondes tombante.

4. Procédé selon la revendication 3, comprenant en outre l'étape consistant à mesurer la puissance à micro-ondes tombant sur la charge factice (18).

5. Procédé selon la revendication 4, dans lequel le résultat de la mesure de la puissance à micro-ondes tombant sur la charge factice (18) est utilisé pour commander la fréquence et/ou la puissance des micro-ondes.

6. Procédé selon la revendication 1, dans lequel l'injection au moyen du premier port d'injection (11) et l'injection au moyen du second port d'injection (12) se produisent depuis deux côtés de la cavité (20) qui sont orthogonaux en relation l'un avec l'autre.

7. Procédé selon l'une quelconque des revendications précédentes, dans lequel chaque port d'injection (11, 12, 13) injecte essentiellement un mode prédéterminé dans la cavité.

8. Procédé selon la revendication 7, dans lequel le premier et le second port d'injection (11, 12) injectent un seul et même mode prédéterminé dans la cavité.

9. Procédé selon la revendication 7, dans lequel le premier et le second port d'injection (11, 12) injectent deux modes différents dans la cavité.

10. Procédé selon la revendication 1, dans lequel la puissance à micro-ondes qui est injectée via les ports d'injection (11, 12, 13) est distribuée dans la cavité (20) au moyen d'un agitateur de micro-ondes.

11. Four à micro-ondes qui comprend une cavité (20, 30), un générateur de micro-ondes (10), un premier port d'injection (11, 21) et un second port d'injection (12, 22), les ports d'injection étant agencés pour injecter une puissance à micro-ondes vers la cavité (20, 30), **caractérisé en ce que** le générateur de micro-ondes (10) est fonctionnellement connecté au premier port d'injection (11, 21) et le premier port d'injection est fonctionnellement connecté au second port d'injection (11, 22) d'une manière telle que toute puissance à micro-ondes qui est réfléchie depuis le premier port d'injection est amenée à passer vers le second port d'injection, la puissance à micro-ondes étant injectée depuis le générateur à micro-ondes (10) vers les ports d'injection (11, 21, 12, 22) au moyen d'une ligne de transmission (14) à laquelle chaque port d'injection est connecté via un circulateur à micro-ondes associé (15, 16).

12. Four à micro-ondes selon la revendication 11, dans lequel la ligne de transmission (14) possède une première, une seconde et une troisième borne, la première borne de la ligne de transmission (14) étant fonctionnellement connectée au générateur (10), sa seconde borne étant fonctionnellement connectée au premier port d'injection, et sa troisième borne étant fonctionnellement connectée au second port d'injection, la ligne de transmission (14) étant adaptée à faire passer la puissance à micro-ondes qui entre sur la première borne pour la faire sortir sur la seconde borne, et à faire passer la puissance à micro-ondes qui entre sur la seconde borne pour la faire sortir sur la troisième borne.

13. Four à micro-ondes selon l'une quelconque des revendications 11 et 12, dans lequel l'un au moins des ports d'injection (11, 21,12, 22, 13, 23) est agencé pour être alimenté avec une puissance à micro-ondes au moyen de la ligne de transmission sous la forme d'une ligne à ruban ou d'un ruban dit "microstrip" (11), la ligne de transmission (41) ayant une fente (44) dans son plan de terre dans une position qui, au moins partiellement, chevauche ledit port d'injection en même temps que la ligne de transmission (41) présente un courant maximum au niveau de ladite fente (44), grâce à quoi le champ magnétique dans ladite ligne de transmission est amené dans la cavité et injecte donc de l'énergie à celle-ci.

14. Four à micro-ondes selon l'une quelconque des revendications 11 et 12, dans lequel l'un au moins des ports d'injection est agencé pour être alimenté avec une puissance à micro-ondes au moyen de la ligne de transmission sous la forme d'une ligne à ruban ou d'un ruban dit "microstrip" (41), le plan de terre de la ligne de transmission étant court-circuité avec son plan de conduction (51) au moyen d'une boucle (53) qui s'étend jusque dans la cavité via ledit port d'injection, grâce à quoi une boucle H est formée qui injecte de l'énergie dans la cavité.

15. Four à micro-ondes selon l'une quelconque des revendications 11 à 14, comprenant en outre une charge factice (18) qui est agencée pour absorber la puissance à micro-ondes qui est réfléchie depuis le dernier port d'injection dans une série de ports d'injection.

16. Four à micro-ondes selon la revendication 15, comprenant en outre une sonde pour mesurer directement ou indirectement la puissance à micro-ondes tombant sur la charge factice (18).
